# EUROPEAN PATENT SPECIFICATION

(11) **EP 3 358 882 B1**
(45) Date of publication and mention of the grant of the patent: **14.07.2021**
(21) Application number: 17154185.7
(22) Date of filing: 01.02.2017
(51) Int. Cl.: H04W 36/00, H04W 88/08, H04W 88/12

(54) **METHOD FOR PRIORITISATION OF INTRA-RAT AND INTER-RAT NEIGHBOUR MEASUREMENTS BY MEANS OF DELAYED SEQUENTIAL ADDITION OF NEIGHBOURS TO THE MEASUREMENT CONFIGURATION**
VERFAHREN ZUR PRIORISIERUNG VON INTRA-RAT- UND INTER-RAT-NACHBARMESSUNGEN DURCH VERZÖGERTE SEQUENTIELLE ZUGABE VON NACHBARN AN DIE MESSKONFIGURATION
PROCÉDÉ D'ÉTABLISSEMENT DES PRIORITÉS DE MESURES DE VOISIN INTRE-RAT ET INTER-RATAU MOYEN D'ADDITION SÉQUENTIELLE RETARDÉE DE VOISINS DE LA CONFIGURATION DE MESURE

(43) Date of publication of application: 08.08.2018
(73) Proprietor: Telefónica Germany GmbH & Co. OHG, 80992 München (DE)
(72) Inventor: Davidovic, Sasa, 81373 München (DE); Müllner, Robert, 81479 München (DE); Leth-Espensen, Mads, 82110 Germering (DE); Seitz, Alexander, 81247 München (DE)
(74) Representative: Herrmann, Uwe

(56) References cited:
- WO-A1-2014/005247
- US-A1- 2008 176 565
- US-A1- 2009 003 279
- US-A1- 2011 098 034
- US-A1- 2013 267 221

## Description

The presented invention relates to the field of cellular mobile telecommunication systems, and more particularly to a method and a network side of a mobile cellular communication network for coordinating the measurement of neighbouring cells.

3rd Generation Partnership Project (3GPP) cellular mobile telecommunication networks use the handover procedure as one of the methods to transfer an ongoing connection with one User Equipment (UE) from a serving cell to a neighbouring cell to provide service continuity for a moving subscriber. The selection of the handover target cell from the list of defined neighbouring cells is typically based on the UE supported intra Radio Access Technology (intra-RAT) and inter-RAT measurements of the received strength and quality of signals from neighbouring cells. Thanks to this the network can select the most appropriate handover target cell by taking into account the signal strength and/or quality of the neighbouring cells reported by the UE. As a result, the handovers to neighbouring cells which do not fulfil the minimum signal strength/quality criteria are avoided, which in general improves the handover success rate.

In order to inform a UE about the neighbouring cells to be measured and reported, the network sends a set of measurement configurations. Amongst others, these typically contain the information about the RAT, frequencies and physical identifiers of the neighbouring cells, such as the Base Station Identity Code (BSIC) for the Global System for Mobile Communications (GSM), Scrambling Code (SC) for the Universal Mobile Telecommunications System (UMTS), or the Physical Cell Identity (PCI) for 3GPP Long Term Evolution (LTE). Moreover, a measurement configuration can also contain the conditions, typically in the form of signal level and/or quality, a neighbour cell must fulfil before a UE can include it in the measurement report. Upon reception of the measurement configuration, the UE starts performing measurements on signalled RATs and frequencies and sending measurement reports to the network containing information about detected neighbour cells, as defined in the relevant 3GPP specification documents.

Cells in 3GPP mobile telecommunication networks typically have multiple neighbours in different RATs using different frequencies. Generally, for each frequency-RAT combination there is a distinct set of parameters in the measurement configuration. Once a UE receives a measurement configuration set from the network, it has to perform neighbour cell measurements on each frequency-RAT combination signalled in the measurement configuration message. Due to the nature of the measurement process, which includes frequency tuning to a specified frequency, signal sampling and processing of sampled data, as well as typical receiver implementations in UEs, where multiple frequency-RAT combinations are processed in sequence and not in parallel, this measurement procedure can take some time in case that several frequency-RAT measurement configurations are signalled. As a result, the time between the moment a neighbouring cell fulfils the handover criteria and the moment the UE detects it and sends a measurement report can in some situations be too long. This can lead to a degradation of the connection performance, or even to a connection drop. This aspect is critical especially for fast moving subscribers at the cell border. An important issue is that fast changing radio channel conditions can hardly be predicted as the situation in real networks often deviates from that modelled by radio network planning tools. Hence identifying the best suited target cell for handover is a key issue for improving the performance of cellular networks.

Furthermore, the 3GPP specifications generally do not provide means to instruct a UE in which priority order to process the signalled frequency-RAT combinations nor specify the time how long it can/must scan and process one frequency-RAT combination before it moves to the next one.

For example, the LTE technical specification (3GPP TS 36.331 V12.8.0 (2015-12), section 5.5.3.1, http://www.3gpp.org/) defines only a procedure which needs to be performed "for each *measld* included in the *measldList* within *VarMeasConfig* ", however, the order of processing of defined *measlds* is not defined. Furthermore, the LTE technical specification (3GPP TS 36.133 V12.8.0 (2015-07), chapter 8, http://www.3gpp.org/) defines the time period within the UE has to identify and report a detectable neighbouring cell. Yet, it is not defined how the UE can or should split the available measuring and reporting time between different *measlds* or neighbours within one *measld.* As a result, network operators have a very limited possibility to prioritise some neighbours and/or frequency-RAT combinations over others and thus limited control over processes such as neighbour cell measurement speed, definition of preferred target frequencies/neighbours for handovers, traffic distribution between frequency and RAT layers, etc.

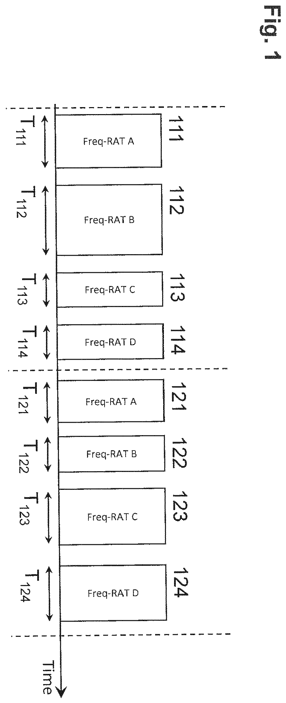

One possible implementation based on the 3GPP LTE specifications is presented in Figure 1. In this example, the network configures four frequency-RAT combinations (A, B, C, and D) and signals them to a UE. Once the UE has received the measurement configuration it starts the measurement processing. In the presented example, 111 indicates the processing of the first frequency-RAT combination A during the processing time T₁₁₁, 112 indicates the processing of the second frequency-RAT combination B during the processing time T₁₁₂, 113 indicates the processing of the third frequency-RAT combination C during the processing time T₁₁₃, and 114 indicates the processing of the fourth frequency-RAT combination D during the processing time T₁₁₄. After all the frequency-RAT combinations A, B, C, and D are processed the procedure is typically repeated from the beginning in a new measurement processing cycle, indicated by 121-124. The order of processing of the frequency-RAT combinations A-D can be freely chosen by the UE. Moreover, the processing time of neighbour detection on a specific frequency-RAT combination (T₁₁₁ - T₁₁₄ and T₁₂₁ - T₁₂₄) is also freely chosen by the UE as long as the time requirements from 3GPP TS 36.133 are fulfilled.

One way to overcome the problem imposed by the 3GPP specifications is to assign different starting points for sending measurement configurations of different frequency-RAT combinations to the UEs. In LTE/LTE-Advanced (LTE-A) this can be easily achieved by using events A1 and A2 with different signal level/quality values for inter-frequency and inter-RAT measurements. Frequency-RAT combinations of higher priority are assigned a higher level/quality threshold and, as the signal level of the serving cell decreases, the measurement configurations of higher priority frequency-RAT combinations are first signalled to the UE. As the signal continues to decrease, the measurement configurations of the lower priority frequency-RAT combinations are added to the measurement configuration set. With appropriate signal offsets between the A1/A2 events for different frequency-RAT combinations it can be achieved that the UE has enough time to search and report neighbours on higher priority frequency-RAT combinations before the lower priority neighbours are included into the measurement configurations.

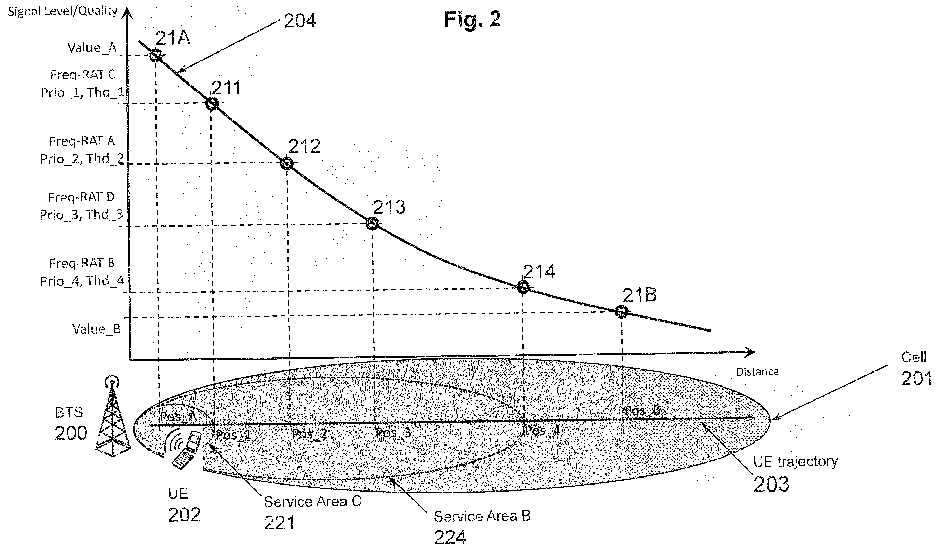

The solution is illustrated in Figure 2. The serving area of base station (BTS) 200 is denoted as cell, and represented by the grey ellipsoid 201. The UE 202 has a connection with the network over the BTS 200, and moves within the cell 201 along the trajectory 203 from position *Pos_A* to *Pos_B.* As the UE 202 moves away from the BTS 200 the received signal level/quality decreases due to increasing radio propagation loss. A typical curve for the received signal level/quality vs. distance is represented by the curve 204. The BTS 200 has four neighbouring frequency-RAT combinations defined, namely A, B, C, D. For each frequency-RAT configuration the network operator defines values of two parameters: measurement priority and measurement start threshold. In the presented case, frequency-RAT combination C has *Prio_1* and *Thd_1,* frequency-RAT combination A has *Prio_2* and *Thd_2,* frequency-RAT combination D has *Prio_3* and *Thd_3,* and frequency-RAT combination B has *Prio_4* and *Thd_4.* The values of the measurement priorities and measurement starting thresholds fulfil the following relation: *Prio_1 > Prio_2 > Prio_3 > Prio_4,* and *Thd_1 > Thd_2 > Thd_3 > Thd_4.*

At the starting position *Pos_A,* the cell signal level/quality received by the UE is *Value_A,* and is larger than *Thd_1.* Once the UE starts to move along the trajectory 203 the received signal level/quality reduces to a value defined by *Thd_1.* At this moment, the network sends over the BTS 200 a measurement configuration to the UE 202 containing only the frequency-RAT combination C. After receiving the measurement configuration the UE 202 starts measuring neighbours on frequency-RAT combination C. If between the positions *Pos_1* and *Pos_2* any neighbours are detected and the requirements for sending a measurement report are fulfilled, the UE 202 sends a measurement report to the network. If no handover is executed before UE 202 reaches the position *Pos_2,* where the received signal level/quality reaches the threshold *Thd_2,* the network adds the frequency-RAT combination A to the measurement configuration. From this point on the UE performs measurements on frequency-RAT combinations C and A. If between the positions *Pos_2* and *Pos_3* any neighbours from frequency-RAT combinations C or A are detected and the requirements for sending a measurement report are fulfilled, the UE 202 sends a measurement report to the network. If no handover is executed before the UE reaches the position *Pos_3,* which corresponds to the received signal level/quality *Thd_3,* the frequency-RAT combination D is added to the measurement configuration. From this point on the UE 202 measures the neighbours on frequency-RAT combinations C, A, and D. The whole process described above continues as the UE moves along the trajectory and reaches position *Pos_4,* where the received signal level/quality reaches threshold *Thd_4.* At this moment, if no handover is executed yet, the network adds the frequency-RAT combination B to the measurement configuration, and the UE 202 performs measurements of the neighbours on frequency-RAT combinations C, A, D, and B.

By sequential addition of the frequency-RAT combinations to the measurement report in the order of their priority *Prio_x* (*x*=1...4) at specific received signal level/quality thresholds *Thd_x* (*x*=1...4) the UEs are preferentially handed over to neighbours using a higher priority frequency-RAT combination. To achieve this, it is necessary that the difference between the thresholds of different priorities is large enough such that the time required to detect neighbours, send the measurement report and execute the handover is shorter than the time required for the UE 202 to move from *Pos_x* to *Pos_x*+*1*.

However, it has to be noticed, that the prioritisation will take effect only if neighbours from a specific frequency-RAT combination are detectable directly after this is added to the measurement configuration. Once the UE reaches a new *Pos_x* and the new frequency-RAT combination is added to the measurement configuration, no prioritisation between the frequency-RAT combinations included in the measurement configuration is possible anymore. The frequency-RAT combination processing is the same as explained in the beginning and illustrated in Figure 1.

The described prior art method has three major disadvantages:
1) Different service area sizes of cell 201 for different freguency-RAT combinations: since neighbour cell measurements of different frequency-RAT combinations start at different positions over the trajectory (i.e. distance from the base station), UEs can be handed over to higher priority frequency-RAT neighbours at higher signal level of the serving cell than in case of the lower priority frequency-RAT neighbours. Due to this, the effective service area of the serving cell is smaller in case that higher priority frequency-RAT neighbours are available than in the case of only lower priority frequency-RAT combinations. In the illustrated example, the handovers towards the frequency-RAT combination C can be executed already from the *Pos_1,* whereas handovers towards the frequency-RAT combination B can be performed only from position *Pos_4.* Thus the service area towards the frequency-RAT combination C, represented by the dashed ellipsoid 221, is potentially smaller than the service area towards frequency-RAT combination B, represented by the dashed ellipsoid 224.
2) Smaller serving area size of cell 201 in case of inter-frequency/inter-RAT cell reselection and handovers towards cell 201: to avoid ping-pong cell reselection and handover effects, the return to the cell 201 can be done only if its signal level is above a specific threshold. This is achieved by setting the reselection/handover thresholds from cells of frequency-RAT combination A-D towards the cell 201 to a value higher than the threshold *Thd_x* of the highest priority frequency-RAT combination (in illustrated case the *Thd_1*)*.* Since *Thd_x* of the lowest priority frequency-RAT combination is lower limited by the sensitivity threshold of the system, the larger the number of different frequency-RAT combinations, the higher is the value of *Thd_x* for the highest priority frequency-RAT combination. This directly increases the value of the cell reselection/handover threshold from cells of frequency-RAT combination A-D towards the cell 201, which leads to the reduction of the serving area size of cell 201 in the inter-frequency and inter-RAT cell reselection/handover procedures towards cell 201.
3) This method is not working if the UE establishes a connection at low signal level of the serving cell 201: if a UE is in a poor coverage area and establishes a connection at very low signal level of the serving cell 201, say at position *Pos_B,* the conditions for sending measurement configurations of several frequency-RAT combinations will be fulfilled. In this case the UE will receive several measurement configuration sets at the same time and no prioritisation of frequency-RAT combinations is possible. At position *Pos_B* in Figure 2, the UE 202 will receive a measurement configuration containing the frequency-RAT combinations A, B, C, and D, and no prioritisation within these combinations is possible.
4) Threshold dependence on frequency band of the serving cell: the gradient of the signal/quality vs. distance curve 204 depends on the frequency band used by the BTS 200. For example, LTE frequencies in the 2600 MHs band have a much higher gradient of the curve 204 than the LTE frequencies in the 800 MHz band. As a result, for the same distance offset between the positions *Pos_x* and *Pos_x*+*1* (i.e. the same time between additions of frequency-RAT combinations x and *x*+*1* to the measurement configuration) the absolute offset between thresholds *Thd_x* and *Thd_x*+*1* in the 2600 MHz band is much larger than in the 800 MHz band. This additionally increases the effect of the different cell area size, as explained in 1).

US2008/176565 A1 suggests definining a multi-radio-access-technology-priority-list comprising n-entries prioritized from a highest priority-radio-access-technology to a lowest priority-radio-access-technology, however, said list does not reflect a priority of neighbouring cells.

The object of the present invention is thus to provide a sufficient solution for the above described challenges and disadvantages.

The object is solved by the method according to the features as defined in claim 1 and a network side of a mobile cellular communication network as defined in claim 9.

Preferable aspects of the inventive method are subject matter of the dependent claims.

According to the present disclosure a method for measurement of neighbouring cells in a cellular mobile telecommunication network is suggested wherein the network defines a measurement configuration including a list of neighbouring cells to be measured by a user equipment (UE). The measurement configuration is sent, preferably regularly sent to the user equipment in preparation of a cell handover.

The present disclosure is based on the basic prerequisite that measurements of neighbouring cells in a cellular mobile telecommunication network are performed by at least one user equipment, such as a mobile receiver adapted to communicate with the network on the basis of a cellular mobile communication standard, e.g. 2G, 3G, 4G or 5G of the 3GPP standard or any modification thereof.

The network adds at least one neighbouring cell or at least one group of neighbouring cells to the list included in the measurement configuration dependent on an individual measurement processing priority of the neighbouring cell/group of neighbouring cells and a predefined waiting time. Definition and modification of the measurement configuration is carried out at any device being part of the network side under control of the network operator. In particular, at least some of the method steps are executed at a base station of the network.

The disclosure introduces a priorisation of neighbouring cells or groups of neighbouring cells for target cell measurements which are executed in state-of-the-art technologies. This is achieved by a sequential and delayed addition of these cells or group of cells to the measurement configuration applied in these prior art solutions, for instance the measldList within VarMeasConfig according to the LTE technical specification (3GPP TS 36.331 V12.8.0 (2015-12), section 5.5.3.1, http://www.3gpp.org/) or any other measurement configuration as defined in the UMTS and GSM standard. In general, with this disclosure it becomes possible to adequately configure intra- and inter-RAT measurements for particular situations according to the environmental conditions in cellular mobile communication networks that vary in time and location. By introduction of a first parameter, the measurement processing priority, the order of priority in which the neighbouring cells/groups of neighbouring cells are included into the measurement configuration, can be defined. A second parameter, the predefined waiting time, realizes a penalty timer. Only after expiry of this timer, a new neighbouring cell/group of neighbouring cells may be added to the measurement configuration.

According to the present disclosure a measurement processing timer is defined which starts after addition of at least one neighbouring cell/group of neighbouring cells to the measurement configuration and expires after the predefined waiting time. A new neighbouring cell/group of neighbouring cells can only be added to the measurement configuration after the timer has already expired.

Further preferable, a measurement processing time is individually configured for at least one neighbouring cell or a group of neighbouring cells at the network and the predefined waiting time is adjusted to the individual measurement processing time of the neighbouring cell/the group of neighbouring cells which has been most recently added to the measurement configuration, in particular the timer is set to the individual measurement processing time of the neighbouring cell/the group of neighbouring cells recently added. As a result, the network operator can control in which order the UE measures the neighbouring cells/group of neighbouring cells as well as the time the UE has to stay on one neighbouring cell/group of neighbouring cells before it moves to another one by appropriate setting of the values of the inventive parameters individual measurement processing time and individual measurement processing priority for each neighbouring cell/group of neighbouring cells.

It can be conceivable that the measurement configuration is sent to the user equipment immediately after addition of a neighbouring cell/group of neighbouring cells to the measurement configuration. However, a certain time interval can be defined, within which the measurement configuration should be sent to the UE.

A group of neighbouring cells can be defined by a certain combination of the frequency used by the cells and the supported cell radio access technology.

In a further preferred aspect a measurement modification queue may be defined at the network to which neighbouring cells/groups of neighbouring cells to be measured by the user equipment are dynamically added. Furthermore, the method may select the neighbouring cell/group of neighbouring cells with the highest priority from said queue and add the selected neighbouring cell/group of neighbouring cells to the measurement configuration after the predefined waiting time. In particular, all neighbouring cells/groups of neighbouring cells which are requested to be added to the measurement configuration will be enqueued in the so called measurement modification queue.

According to one aspect a neighbouring cell/group of neighbouring cells is added to the measurement modification queue while the measurement processing timer is still running. In that case the method waits until the measurement processing timer expires before a new neighbouring cell/group of neighbouring cells, which should be next added to the measurement configuration, is selected.

Alternatively, if a neighbouring cell/group of neighbouring cells is added to the measurement modification queue the method compares the individual measurement processing priority of a new neighbouring cell/group of neighbouring cells to be added or just added to the measurement modification queue against the individual measurement processing priority of the neighbouring cell/group of neighbouring cells currently measured by the user equipment or recently added to the measurement configuration. Preferably, the method may immediately add said new neighbouring cell/group of neighbouring cells to the measurement configuration if its priority is higher than the priority of the currently measured or recently added neighbouring cell/group of neighbouring cells. In particular, if a neighbouring cell/group of neighbouring cells is added to the measurement modification queue while the measurement processing timer is running, the method compares the priority of the neighbouring cell/group of neighbouring cells just added to the measurement modification queue (Prio_x_new) and the neighbouring cell/group of neighbouring cells, for which the timer is running (Prio_x_running). If Prio_x_new > Prio_x_running the method sets the measurement processing timer to expired, removes the neighbouring cell/group of neighbouring cells, for which the measurement processing timer was running, from the measurement configuration and places it to the measurement modification queue. The preferred aspect of the disclosure assures that a neighbouring cell/group of neighbouring cells does not have to wait for the measurement processing timer to expire if its priority is higher than the priority of the neighbouring cell/group of neighbouring cells for which the timer is currently running.

As described above, the method may simply add the queued neighbouring cell/group of neighbouring cells having the highest priority to the measurement configuration. According to an alternative and a further preferred aspect of the present disclosure before adding a new neighbouring cell/group of neighbouring cells from the queue to the measurement configuration all or at least some of the neighbouring cells/groups of neighbouring cells already included in the list of the measurement configuration are temporarily deleted or at least removed from the list of the measurement configuration. The benefit of this preferred aspect is that it can be assured that when a new neighbouring cell/group of neighbouring cells is added to the measurement configuration, all other neighbouring cells/groups of neighbouring cells already included in the measurement configuration are temporarily removed from it at least for the individual measurement processing time of the newly added neighbouring cell/group of neighbouring cells. As a result, during this time the user equipment has to measure only one and not multiple neighbouring cells/groups of neighbouring cells. The preferred aspect of the invention sufficiently solves the problem number 3 of the prior art as described in the introductory part of the application.

In particular, the former entries of neighbouring cells/groups of neighbouring cells included in the measurement configuration may be transferred to a measurement completed list at the network side. Therefore, these entries can be kept for later reuse.

Basically, the deletion of neighbouring cells/groups of neighbouring cells from the measurement configuration is generally independent of this process. In one aspect, the deletion can be done at any time. According to a more preferred aspect of the disclosure, the deletion of neighbouring cells/groups of neighbouring cells shall be done only when the measurement processing timer has expired. Thereby, the removal is coordinated with the modification of the measurement configuration due to the addition of a new neighbouring cell/group of neighbouring cells, which avoids potential interruptions of the measurement process due to measurement re-configurations. Moreover, it reduces the network signaling load caused by these measurement re-configurations. According to both aspects of the disclosure it may be possible that the neighbouring cells/groups of neighbouring cells to be deleted must also be removed from the measurement modification queue and the measurement completed list.

Under the above circumstances it may also be conceivable that the neighbouring cells/groups of neighbouring cells included in the measurement completed list are copied to the measurement configuration if the measurement modification queue is empty. Afterwards the measurement completed list may be cleared.

Another preferred aspect of the disclosure refers to the transmission of measurement reports from the UE to the network. Such measurement reports include results of measurements which the UE performed for the configured neighbouring cells/groups of neighbouring cells (configured in the measurement configuration sent to the UE). The measurement results regularly list at least the measured signal strength and quality for each measured cell. Generally, the transmission of a measurement report from the UE to the network is independent of the measurement process. This means that a measurement report can be sent as soon as the conditions necessary for its transmission are fulfilled, for instance as defined in the relevant 3GPP specification documents. This can happen even before the measurement processing timer has expired. After receipt of a measurement report the network may - according to a preferred aspect - block a change of the measurement configuration (applicable due to the provided report) until expiry of the predefined waiting time. Alternatively, a change of the measurement configuration may be allowed if at least one defined condition is fulfilled, in particular in case the measured signal level and/or quality of the reported neighbouring cell(s) is higher than a pre-defined threshold and/or the number of detected and reported neighbouring cells of one group of neighbouring cells during the individual measurement processing time is higher than a pre-defined threshold.

Preferable, the measurement processing priority and/or the predefined waiting time, in particular the individual measurement processing time, are configured dependent on at least one of the following conditions: the active service type of the user equipment and/or the current location of the user equipment and/or the current mobility of the user equipment and/or the current moving direction of the user equipment and/or the signal strength and quality measured by the user equipment for the currently serving cell and/or a user specific traffic profile and/or network performance indicators in the serving cell and/or neighbouring cell and/or the whole area where the user equipment is located.

Differentiation of service types shall preferentially be done via their Quality of Service (QoS) attributes, i.e. Traffic Class and Traffic Handling Priority for GSM and UMTS [3GPP TS 23.107 V11.0.0, "Quality of Service (QoS) concept and architecture", 2012, http://www.3gpp.org] and via its QoS Class Identifier (QCI) for LTE [3GPP TS 23.203 V12.3.0, "Technical Specification Group Services and System Aspects; Policy and charging control architecture", 2013, http://www.3gpp.org].

According to a further preferred aspect of the disclosure the QoS attribute Guaranteed Bit-Rate (GBR) or a combination with the attributes Traffic Class or QCI shall be used to differentiate between service types for the definition of measurement processing priority and the individual measurement processing time, in particular a minimum individual measurement processing time and/or a maximum individual measurement processing time.

Information about the current location of a UE may be provided by way of Global Positioning System (GPS) measurements or any similar technology based on signal propagation times from several satellites as well as from evaluation of the radio propagation conditions, i.e. signal strength and signal quality measurements in the serving cell. Preferentially a long minimum individual measurement processing time and long maximum individual measurement processing time shall be defined for UEs that are sufficiently far away from the predicted cell border and the measurement processing priority shall be defined such that the measurements in the radio access technology that generally provides the best performance are done first. For instance, measurements for neighboring cells serving the upcoming fifth generation (5G) should be performed before measurement for cells supporting the LTE/LTE-Advanced (LTE-A), UMTS and GSM standard. In particular network areas this sequence might be different due to traffic load, propagation or inter-connection aspects.

Furthermore, a short minimum individual measurement processing time and a short maximum individual measurement processing time shall be defined for UEs of low signal strength and quality of the serving cell. This setting avoids call drops in poor radio conditions in which a fast handover to any better suited cell is beneficial.

The setting of the parameter values for the measurement processing priority and/or the pre-defined waiting time can be static or dynamic. In case of dynamic setting, the parameter change can be generally triggered at any time (i.e. even during an ongoing connection) as a result of changes of the above mentioned inputs.

The proposed method has no impact on the existing 3GPP procedures and requires no changes in the 3GPP standard. The method can be completely implemented in the network software (for LTE typically in the evolved Node B (eNB) software). This method insures that at the moment a neighbouring cell/group of neighbouring cells is added to the measurement configuration, the measurement configuration contains only this particular neighbouring cell/group of neighbouring cells for a specific period of time, thereby, avoiding the problem number 3 from the prior art solution.

The inventive procedure of modifications of the measurement configuration, according to the invention, is explained in more details in the sequel. The figures show:
- Figure 1:: a possible implementation for a measurement procedure of neighbouring cells based on the 3GPP LTE specification
- Figure 2:: a modified solution based on the standard specification according to figure 1.
- Figure 3:: a block diagram of the respective steps executed by the method according to the present invention.

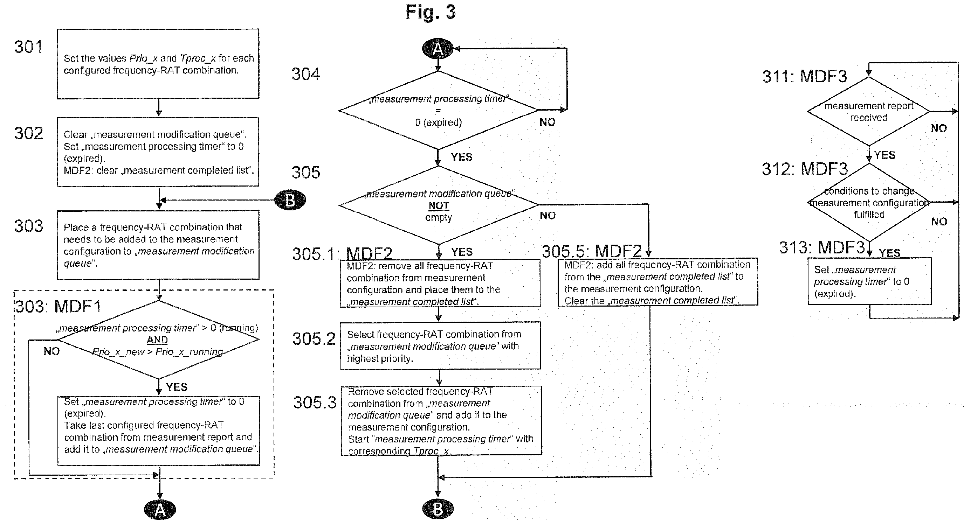

The procedure has several embodiments, denoted as MDFx, where x is the embodiment identification number. For the illustration purposes, the presented procedure is also depicted in Figure 3.

At step 1, illustrated by 301 in Figure 3, two parameters shall be assigned to each configured frequency-RAT combination: **Measurement processing priority** (*Prio_x*) and **Waiting time for measurement processing** *(Tproc_x).* The values of *Prio_x* and *Tproc_x* can be set based on different inputs, such as:
i. Active service type (voice, video call, data, streaming, etc. or any combination of these). Differentiation of these services shall preferentially be done via their Quality of Service (QoS) attributes, i.e. Traffic Class and Traffic Handling Priority for GSM and UMTS [3GPP TS 23.107 V11.0.0, "Quality of Service (QoS) concept and architecture", 2012, http://www.3gpp.org] and via its QoS Class Identifier (QCI) for LTE [3GPP TS 23.203 V12.3.0, "Technical Specification Group Services and System Aspects; Policy and charging control architecture", 2013, http://www.3gpp.org]. In a further embodiment of this invention, the QoS attribute Guaranteed Bit-Rate (GBR) or a combination with the attributes Traffic Class or QCI shall be used to differentiate between service types for the definition of *"measurement processing priority', "minimum time for measurement processing",* and/or *"maximum time for measurement processing".*
ii. UE location, mobility and direction of movement. Information about the location of the UE is available via Global Positioning System (GPS) measurements or any similar technology based on signal propagation times from several satellites as well as from evaluation of the radio propagation conditions, i.e. signal strength and signal quality measurements in the serving cell. Preferentially long *"minimum time for measurement processing"* and long *"maximum time for measurement processing"* shall be defined for UEs that are sufficiently far away from the predicted cell border and the *"measurement processing priority"* shall be defined such that the measurements in the RAT that generally provides the best performance are done first. This is typically the upcoming fifth generation (5G) before LTE/LTE-Advanced (LTE-A), UMTS and GSM. In particular network areas this sequence might be different due to traffic load, propagation or inter-connection aspects.
iii. Signal strength and quality. Preferentially a short *"minimum time for measurement processing"* and a short *"maximum time for measurement processing"* shall be defined for UEs of low signal strength and quality of the serving cell. This setting avoids call drops in poor radio conditions in which a fast handover to any better suited cell is beneficial.
iv. Network performance indicators in the serving cell, neighbouring cell or the whole area where the UE is located, or any combination of these.
v. User specific traffic profile.
vi. Any combination of the above mentioned or any other inputs.

The setting of the parameter values can be static or dynamic. In case of dynamic setting, the parameter change can be generally triggered at any time (i.e. even during an ongoing connection) as a result of changes of the above mentioned inputs.

At step 2, illustrated by 302 in Figure 3, which is typically done during establishment of the connection between the network and the UE, the *"measurement processing timer"* shall be set to "expired", and the queuing list *"measurement modification queue",* as well as *"measurement completed list'* in case of embodiment MDF2, shall be cleared.

At step 3, illustrated by 303 in Figure 3, each new frequency-RAT combination that needs to be added to the measurement configuration shall be added to the *"measurement modification queue".*

In one embodiment of the invention, denoted as *"Modification 1"* or MDF1, the algorithm shall check whether the *"measurement processing timer"* is running. If yes, it shall compare the priority of the new frequency-RAT combination just added to the *"measurement modification queue"* (*Prio_x_new*) with the priority of the frequency-RAT combination last added to the measurement configuration (*Prio_x_running*)*,* for which the *"measurement processing timer"* is still running. If *Prio_x_new > Prio_x_running* then the algorithm shall set the *"measurement processing timer"* to "expired", remove the last added frequency-RAT combination from the measurement configuration and place it to the *"measurement modification queue".* With this embodiment it is assured that a new frequency-RAT combination does not have to wait for the *"measurement processing timer"* to expire if its priority is higher than the priority of the frequency-RAT combination for which the timer is running.

At step 4, illustrated by 304 in Figure 3 the algorithm shall check whether the *"measurement processing timer"* is expired. If not, the algorithm shall return to step 4. If yes, it shall continue with the next step.

At step 5, illustrated by 305 in Figure 3, the algorithm shall check whether at least one new frequency-RAT combination is waiting to be added to the measurement configuration, i.e. if there are entries in the *"measurement modification queue".* If yes, the following sub-steps shall be performed:
Step 5.1 may be optional. According to an embodiment not illustrated in Figure 3 the procedure may directly move from step 5 to step 5.2. This practically means that all frequency-RAT combinations already contained in the measurement configuration shall be left unchanged, i.e. shall be further kept in the measurement configuration.
In step 5.2, illustrated by 305.2 in Figure 3, the algorithm selects from the *"measurement modification queue"* the frequency-RAT combination with the highest priority, defined by the parameter **Measurement processing priority** *(Prio_x).* If several frequency-RAT combinations have the same priority the algorithm shall provide a selection method, e.g. randomly, or by selecting the one which is waiting the longest time, or some other method. If the selected frequency-RAT combination is already contained in the measurement configuration, it shall be removed from the *"measurement modification queue"* and step 5.2 shall be repeated.
In step 5.3, illustrated by 305.3 in Figure 3, the selected frequency-RAT combination is removed from the *"measurement modification queue"* and added to the measurement configuration. Further, the *"measurement processing timer"* is set to "running" with the initial value *Tproc_x,* corresponding to the value of the parameter **Waiting time for measurement processing** of the added frequency-RAT combination. After step 5.3 is finished the procedure will jump directly to step 3.

If no new frequency-RAT combinations are waiting to be added to the measurement configuration, i.e. if the *"measurement modification queue"* is empty, the following steps shall be performed. Step 5.5, not illustrated in Figure 3, will jump directly to step 3. This practically means that the measurement configuration shall be left unchanged.

In one embodiment of the invention denoted as *"Modification 2*" or MDF2 and exactly presented in figure 3 the following changes with respect to the steps 5.1 and 5.5 shall be done.

In step 5.1 (MDF2), illustrated by 305.1 in Figure 3, the frequency-RAT combinations, which are already contained in the measurement configuration, are deleted from the measurement configuration and added to the *"measurement completed list" .*

In step 5.5 (MDF 2), illustrated by 305.5 in Figure 3, the algorithm shall add all the frequency-RAT combinations from the *"measurement completed list'* to the measurement configuration. In the following, the *"measurement completed list'* shall be cleared. The algorithm shall provide a method to avoid adding multiple instances of the same frequency-RAT combinations to the measurement configuration. After step 5.5 (MDF 2) is finished the procedure will jump directly to step 3.

Steps 1-3 and 4-5 can also be realised as independent parallel processes. In this case, step 3 is an endless loop, i.e. after all step 3 procedures are finished, the algorithm starts again in step 3.

In one embodiment of the invention, denoted as *"Modification* 3" or MDF3, after the measurement report has been received by the network, the network may decide to change the measurement configuration even if *"measurement processing timer"* is still running. The decision can be based on different conditions, as explained in the description above. In this embodiment, a process which is running in parallel with the processes described above can be used to set the *"measurement processing timer"* to expired in order to trigger the modification of the measurement configuration. This process contains three steps. In step 1, illustrated by 311 in Figure 3, the algorithm checks if the measurement report has been sent during the running time of the *"measurement processing timer".* If not, the algorithm goes to the beginning of step 1, illustrated by 311 in Figure 3. If yes, the algorithm goes to step 2, illustrated by 312 in Figure 3, where it checks if the conditions to change the measurement configuration are fulfilled. If not, the algorithm goes to the beginning of step 1, illustrated by 311 in Figure 3. If yes, the algorithm goes to step 3, illustrated by 313 in Figure 3. In this step the algorithm sets the *"measurement processing timer"* to expired and goes to the beginning of the step 1, illustrated by 311 in Figure 3.

The proposed method can also be extended to cases where the UE has multiple receivers used to perform measurements of several frequency-RAT combinations in parallel. In this case, each measurement unit shall be assigned a number of frequency-RAT configurations, which is a subset of the complete set of frequency-RAT configurations defined in the serving cell. This assignment of the frequency-RAT combinations to specific measurement units shall be done by the network. The above presented method is then applied on the sub-set of frequency-RAT combinations within each measurement unit independently.

### Summary of the Steps

- Introduction of a prioritisation of frequency-RAT combinations for target cell measurements that are executed in state-of-the-art technologies.
- This is achieved by a sequential and delayed addition of frequency-RAT combinations to the measurement configuration applied in these prior art solutions.
- Two parameters are introduced, the first one "measurement processing priority" to define the order of priority in which the frequency-RAT combinations are included into the measurement configuration. The second parameter "waiting time for measurement processing" realises a penalty timer. Only after expiry of this timer, a new frequency-RAT combination may be added to the measurement configuration.
- A procedure that ranks the frequency-RAT combinations waiting to be added to the measurement configuration according to their priority defined by the parameter "measurement processing priority".
- Assigning of values to both parameters for each frequency-RAT combination based on multiple input data, such as service type, location, mobility and direction of movement of the UE, receive signal strength and quality, network performance indicators in the considered network area, and user specific traffic profile, or any combination of these inputs.
- A procedure that sets the "measurement processing timer" to "expired" during establishment of the connection.
- A procedure that further clears the queuing lists "measurement modification queue" and "measurement completed list".
- A procedure that adds each new frequency-RAT combination to be added to the measurement configuration to the "measure modification queue".
- A timer based procedure to decide on adding new frequency-RAT combinations to the measurement configuration.
- A procedure that adds a quality based threshold of the received signal to decide on adding or exchanging frequency-RAT combinations and combines this quality based threshold with the signal strength threshold of prior art solutions via an AND or an OR conjunction.
- A procedure which sets the value of the "measurement processing timer" to expired if the frequency-RAT combination last added to the "measurement modification queue" has higher priority than the frequency-RAT combination for which the "measurement processing timer" is running. In this case, the frequency-RAT combination for which the "measurement processing timer" is running is removed from the measurement configuration and placed back to the "measurement modification queue".
- Before a neighbour and/or frequency-RAT combination is added from the "measurement modification queue" to the measurement configuration, all neighbours and/or frequency-RAT combinations already contained in the measurement configuration are deleted from it and placed to the "measurement completed list". Once the "measurement processing timer" has expired and the "measurement modification queue" is empty, all the neighbours and/or frequency-RAT combinations in the "measurement completed list" shall be added to the measurement configuration and the "measurement completed list" shall be cleared.
- A procedure which sets the "measurement processing timer" to expired if the network has received a measurement report from the UE and it needs immediately to change the measurement configuration while the "measurement processing timer" is running.

## Claims

1. A method for measurement of neighbouring cells in a cellular mobile telecommunication network wherein a network side of the cellular mobile telecommunication network defines a measurement configuration including a list of neighbouring cells to be measured by a user equipment and which is sent by the network side to the user equipment in preparation of a cell handover,
**characterized in**
**that** the network side adds at least one group of neighbouring cells to the list included in the measurement configuration dependent on an individual measurement processing priority of the group of neighbouring cells defining the order of priority in which the groups of neighbouring cells are included into the list included in the measurment configuration and dependent on a predefined waiting time wherein a group of neighbouring cells is defined by a certain combination of the cell frequency and the supported cell radio access technology and wherein a measurement processing timer starts at the network side after said addition of the at least one group of neighbouring cells to the list included in the measurement configuration and expires after the predefined waiting time wherein a new group of neighbouring cells can only be added to the list included in the measurement configuration after the timer has already expired and wherein a measurement processing time is individually configured for a group of neighbouring cells by the network side and the predefined waiting time is set to the individual measurement processing time of the group of neighbouring cells which has been most recently added to the list included in the measurement configuration.

2. The method according to claim 1, **characterized in that** the measurement configuration is sent by the network side to the user equipment after said addition of the at least one group of neighbouring cells to the list included in the measurement configuration.

3. The method according to any of the proceeding claims, **characterized in that** a measurement modification queue is defined at the network side to which groups of neighbouring cells to be measured by the user equipment are dynamically added wherein the group of neighbouring cells with the highest individual measurement processing priority from the queue is selected and added to the list included in the measurement configuration after the predefined waiting time.

4. The method according to any of the preceding claims **characterized in that** in case a new group of neighbouring cells is added to the list included in the measurement configuration all or at least some of the groups of neighbouring cells already included in the list of the measurement configuration are temporarily deleted from the list and preferably transferred to a measurement completed list at the network side.

5. The method according to claim 4 **characterized in that** the groups of neighbouring cells included in the measurement completed list are copied to the list included in the measurement configuration if the measurement modification queue is empty.

6. The method according to any of the claims 4 or 5 **characterized in that** the measurement completed list and/or the measurement modification queue are cleared before the transfer of all or at least some of the groups of neighbouring cells already included in the list of the measurement configuration to a measurement completed list.

7. The method according to any of the preceding claims **characterized in that** the measurement processing priority and/or the predefined waiting time set to the individual measurement processing time are configured dependent on at least one or a combination of the following conditions: the active service type of the user equipment or the current location of the user equipment or the current mobility of the user equipment or the current moving direction of the user equipment or the signal strength and quality measured by the user equipment for the currently serving cell or a user specific traffic profile or network performance indicators in the serving cell or neighbouring cell or the whole area where the user equipment is located.

8. The method according to claim 7 **characterized in that** the configuration of the measurement processing priority and/or the predefined waiting time set to the individual measurement processing time is static or dynamic wherein in case of a dynamic configuration the change of the parameters may be triggered by a change of the conditions according to claim 7.

9. A network side of a mobile cellular communication network configured to execute the method according to any of claims 1 to 8.

10. A base station of a network side according to claim 9, wherein the base station is configured to execute the method according to any of claims 1 to 8.

## Patentansprüche

1. Verfahren zum Messen von Nachbarzellen in einem Mobilfunktelekommunikationsnetz, wobei eine Netzseite des Mobilfunktelekommunikationsnetzes eine Messkonfiguration definiert, die eine Liste von Nachbarzellen beinhaltet, die von einer Nutzerausrüstung gemessen werden sollen, und die zur Vorbereitung eines Zellen-Handovers von der Netzseite an die Nutzerausrüstung gesendet wird,
**dadurch gekennzeichnet, dass**
die Netzseite wenigstens eine Gruppe von Nachbarzellen zur Liste hinzufügt, die in der Messkonfiguration beinhaltet ist, abhängig von einer individuellen Messverarbeitungspriorität der Gruppe von Nachbarzellen, die die Prioritätenfolge definiert, in der die Gruppen von Nachbarzellen in der Liste beinhaltet sind, die in der Messkonfiguration beinhaltet ist, und abhängig von einer vordefinierten Wartezeit, wobei eine Gruppe von Nachbarzellen durch eine bestimmte Kombination aus Zellfrequenz und der unterstützten Zellfunkzugangstechnologie definiert wird und wobei ein Messverarbeitungszeitnehmer nach dem Hinzufügen der wenigstens einen Gruppe von Nachbarzellen zur Liste, die in der Messkonfiguration beinhaltet ist, auf der Netzseite startet und nach der vordefinierten Wartezeit verfällt, wobei eine neue Gruppe von Nachbarzellen erst zur Liste, die in der Messkonfiguration beinhaltet ist, hinzugefügt werden kann, nachdem der Timer bereits abgelaufen ist, und wobei eine Messverarbeitungszeit für eine Gruppe von Nachbarzellen von der Netzseite individuell konfiguriert wird und die vordefinierte Wartezeit auf die individuelle Messverarbeitungszeit der Gruppe von Nachbarzellen, die zuletzt der in der Messkonfiguration beinhalteten Liste hinzugefügt worden ist, eingestellt wird.

2. Verfahren nach Anspruch 1, **dadurch gekennzeichnet, dass** die Messkonfiguration nach dem Hinzufügen der wenigstens einen Gruppe von Nachbarzellen zur Liste, die in der Messkonfiguration beinhaltet ist, von der Netzseite an das Benutzergerät gesendet wird.

3. Verfahren nach einem der vorhergehenden Ansprüche, **dadurch gekennzeichnet, dass** eine Messmodifikationswarteschlange auf der Netzseite definiert wird, zu der Gruppen von Nachbarzellen, die von den Benutzergeräten gemessen werden sollen, dynamisch hinzugefügt werden, wobei die Gruppe von Nachbarzellen mit der höchsten individuellen Messverarbeitungspriorität aus der Warteschlange ausgewählt wird und nach der vordefinierten Wartezeit zur Liste, die in der Messkonfiguration beinhaltet ist, hinzugefügt wird.

4. Verfahren nach einem der vorhergehenden Ansprüche, **dadurch gekennzeichnet, dass** im Fall, dass eine neue Gruppe von Nachbarzellen der Liste, die in der Messkonfiguration beinhaltet ist, hinzugefügt wird, alle oder wenigstens einige der Gruppen von Nachbarzellen, die bereits in der Liste der Messkonfiguration beinhaltet sind, vorübergehend aus der Liste gelöscht werden und vorzugsweise an eine Messung-abgeschlossen-Liste auf der Netzseite übertragen werden.

5. Verfahren nach Anspruch 4, **dadurch gekennzeichnet, dass** die Gruppen von Nachbarzellen, die in der Messung-abgeschlossen-Liste beinhaltet sind, in die Liste kopiert werden, die in der Messkonfiguration beinhaltet ist, falls die Messmodifikationswarteschlange leer ist.

6. Verfahren nach einem der Ansprüche 4 oder 5, **dadurch gekennzeichnet, dass** die Messung-abgeschlossen-Liste und/oder die Messmodifikationswarteschlange vor der Übertragung aller oder wenigstens einiger der Gruppen von Nachbarzellen, die bereits in der Liste der Messkonfiguration beinhaltet sind, an eine Messung-abgeschlossen-Liste bereinigt wird.

7. Verfahren nach einem der vorhergehenden Ansprüche, **dadurch gekennzeichnet, dass** die Messverarbeitungspriorität und/oder die vordefinierte Wartezeit, die auf die individuelle Messverarbeitungszeit eingestellt ist, abhängig von wenigstens einer oder einer Kombination der folgenden Bedingungen konfiguriert ist: der aktive Servicetyp des Benutzergeräts oder der aktuelle Standort des Benutzergeräts oder die aktuelle Mobilität des Benutzergeräts oder die aktuelle Bewegungsrichtung des Benutzergeräts oder die Signalstärke und -qualität, die von dem Benutzergerät für die aktuell zuständige Zelle gemessen wird, oder ein benutzerspezifisches Verkehrsprofil oder Netzleistungsindikatoren in der zuständigen Zelle oder Nachbarzelle oder der gesamte Bereich, an dem sich das Benutzergerät befindet.

8. Verfahren nach Anspruch 7, **dadurch gekennzeichnet, dass** die Konfiguration der Messverarbeitungspriorität und/oder der vordefinierten Wartezeit, die auf die individuelle Messverarbeitungszeit eingestellt ist, statisch oder dynamisch ist, wobei in einem Fall einer dynamischen Konfiguration die Änderung der Parameter durch eine Änderung der Bedingungen nach Anspruch 7 ausgelöst werden kann.

9. Netzseite eines Mobilfunkkommunikationsnetzes, die konfiguriert ist, das Verfahren nach einem der Ansprüche 1 bis 8 auszuführen.

10. Basisstation einer Netzseite nach Anspruch 9, wobei die Basisstation konfiguriert ist, das Verfahren nach einem der Ansprüche 1 bis 8 auszuführen.

## Revendications

1. Procédé de mesure de cellules voisines dans un réseau de télécommunication mobile cellulaire dans lequel un côté de réseau du réseau de télécommunication mobile cellulaire définit une configuration de mesure incluant une liste de cellules voisines devant être mesurées par un équipement d'utilisateur et qui est envoyée par le côté de réseau à l'équipement d'utilisateur en préparation d'un transfert intercellulaire,
**caractérisé en ce que**
le côté de réseau ajoute au moins un groupe de cellules voisines à la liste incluse dans la configuration de mesure en fonction d'une priorité de traitement de mesure individuelle du groupe de cellules voisines définissant l'ordre de priorité dans lequel les groupes de cellules voisines sont inclus dans la liste incluse dans la configuration de mesure et en fonction d'un temps d'attente prédéfini dans lequel un groupe de cellules voisines est défini par une certaine combinaison de la fréquence cellulaire et de la technologie d'accès radio cellulaire supportée et dans lequel un temporisateur de traitement de mesure démarre au niveau du côté de réseau après ledit ajout de l'au moins un groupe de cellules voisines à la liste incluse dans la configuration de mesure et expire après le temps d'attente prédéfini dans lequel un nouveau groupe de cellules voisines peut seulement être ajouté à la liste incluse dans la configuration de mesure après l'expiration du temporisateur et dans lequel un temps de traitement de mesure est individuellement configuré pour un groupe de cellules voisines par le côté de réseau et le temps d'attente prédéfini est défini pour être le temps de traitement de mesure individuelle du groupe de cellules voisines qui a été ajouté le plus récemment à la liste incluse dans la configuration de mesure.

2. Procédé selon la revendication 1, **caractérisé en ce que** la configuration de mesure est envoyée par le côté de réseau à l'équipement d'utilisateur après ledit ajout de l'au moins un groupe de cellules voisines à la liste incluse dans la configuration de mesure.

3. Procédé selon l'une quelconque des revendications précédentes, **caractérisé en ce qu'**une file d'attente de modification de mesure est définie au niveau du côté de réseau auquel des groupes de cellules voisines devant être mesurées par l'équipement d'utilisateur sont dynamiquement ajoutés dans lequel le groupe de cellules mobiles avec la plus grande priorité de traitement de mesure individuelle de la file d'attente est sélectionné et ajouté à la liste incluse dans la configuration de mesure après le temps d'attente prédéfini.

4. Procédé selon l'une quelconque des revendications précédentes **caractérisé en ce que** dans le cas où un nouveau groupe de cellules voisines est ajouté à la liste incluse dans la configuration de mesure tous les ou au moins certains des groupes de cellules voisines déjà inclus dans la liste de la configuration de mesure sont temporairement supprimés de la liste et de préférence transférés à une liste complétée de mesure au niveau du côté de réseau.

5. Procédé selon la revendication 4 **caractérisé en ce que** les groupes de cellules voisines inclus dans la liste complétée de mesure sont copiés dans la liste incluse dans la configuration de mesure si la file d'attente de modification de mesure est vide.

6. Procédé selon l'une quelconque des revendications 4 ou 5 **caractérisé en ce que** la liste complétée de mesure et/ou la file d'attente de modification de mesure sont vidées avant le transfert de tous les ou d'au moins certains des groupes de cellules voisines déjà inclus dans la liste de la configuration de mesure vers une liste complétée de mesure.

7. Procédé selon l'une quelconque des revendications précédentes **caractérisé en ce que** la priorité de traitement de mesure et/ou le temps d'attente prédéfini défini pour être le temps de traitement de mesure individuelle sont configurés en fonction d'au moins l'une ou d'une combinaison des conditions suivantes : le type de service actif de l'équipement d'utilisateur ou l'emplacement actuel de l'équipement d'utilisateur ou la mobilité actuelle de l'équipement d'utilisateur ou la direction de déplacement actuelle de l'équipement d'utilisateur ou l'intensité de signal et la qualité mesurées par l'équipement d'utilisateur pour la cellule actuellement en service ou un profil de trafic spécifique de l'utilisateur ou des indicateurs de performance de réseau dans la cellule en service ou la cellule voisine ou toute la zone où l'équipement d'utilisateur est situé.

8. Procédé selon la revendication 7 **caractérisé en ce que** la configuration de la priorité de traitement de mesure et/ou le temps d'attente prédéfini défini pour être le temps de traitement de mesure individuelle est statique ou dynamique dans lequel dans le cas d'une configuration dynamique le changement des paramètres peut être déclenché par un changement des conditions selon la revendication 7.

9. Côté de réseau d'un réseau de communication cellulaire mobile configuré pour exécuter le procédé selon l'une quelconque des revendications 1 à 8.

10. Station de base d'un côté de réseau selon la revendication 9, dans laquelle la station de base est configurée pour exécuter le procédé selon l'une quelconque des revendications 1 à 8.
